# EUROPEAN PATENT SPECIFICATION

(11) **EP 2 554 814 B1**
(45) Date of publication and mention of the grant of the patent: **12.03.2014**
(21) Application number: 12178627.1
(22) Date of filing: 31.07.2012
(51) Int. Cl.: B01D 53/86, B01D 53/62, B01D 53/90, B01D 53/94, F01N 3/20

(54) **Gas turbine system with an exhaust catalyst**
Gasturbine mit einem Abgaskatalysator
Turbine à gaz pourvue d'un catalysateur d'échappement

(30) Priority: 02.08.2011 US 201113195895
(43) Date of publication of application: 06.02.2013
(73) Proprietor: General Electric Company, Schenectady, NY 12345 (US)
(72) Inventor: Merchant, Laxmikant, 560066 Karnataka (IN); Hoskin, Robert Frank, Atlanta, GA Georgia 30339 (US); Sarma, Vedhanabhatla, 560066 Karnataka (IN); Mazumder, Indrajit, 560066 Karnataka (IN); Saha, Rajarshi, 560066 Karnataka (IN); Kraemer, Gilbert Otto, Greenville, SC South Carolina 29605 (US)
(74) Representative: Williams, Andrew Richard

(56) References cited:
- US-A1- 2009 220 401
- US-A1- 2011 030 331
- US-B1- 6 878 359

## Description

### TECHNICAL FIELD

The present application and the resultant patent relate generally to gas turbine engine systems and more particularly relate to a gas turbine engine system having a selective catalyst reduction system driven by captured carbon dioxide or other types of gases.

### BACKGROUND OF THE INVENTION

Generally described, carbon dioxide ("CO₂") produced in power generation facilities and the like is considered to be a greenhouse gas. As such, governmental regulations generally require the capture and sequestration of the carbon dioxide produced in the overall power generation process as opposed to venting into the atmosphere. Specifically, the carbon dioxide may be compressed and intercooled in a number of stages to reach a supercritical state. The carbon dioxide then may be liquefied and transported for end usage such as deep ocean sequestration, enhanced oil recovery, or other uses.

Likewise, power generation equipment produces nitrogen oxides (NOx) and other gasses. The production of nitrogen oxides also is subject to increasing governmental regulation. One solution for reducing overall nitrogen oxide emissions in gas turbine engines is the use of a selective catalyst reduction ("SCR") system. Such a SCR system may be connected to the gas turbine exit via ducting and the like. The SCR system adds a reductant, typically ammonia or urea, to the exhaust gas stream before passing the stream through a catalytic bed so as to absorb selectively the nitrogen oxides and the reducing agent. The absorbed components undergo a chemical reaction on the catalyst surface and the reaction products are desorbed. Specifically, the reductant reacts with the nitrogen oxides in the flow of exhaust gas to form water and nitrogen (4NO + 4NH₃ + O₂= 6H₂0 + 4N₂ at about 549 degrees Fahrenheit to about 664 degrees Fahrenheit (about 287.2 degrees Celsius to about 351.1 degrees Celsius)). Catalysts that use other types of reductants also are known in the art.

Although known SCR systems generally are efficient at reducing the amount of nitrogen oxides, emissions may be reduced by up to about ninety percent (90%) in some applications, such systems generally require a dedicated atomizing air source, a flue gas recirculation line with a flue gas fan, or both in order to vaporize and atomize the ammonia. As such, the overall SCR system involves at least some parasitic drain on the gas turbine engine system as a whole. Further, nitrogen oxide emissions also may spike during transient operation conditions such as during engine startup, load swing conditions, and the like. These nitrogen oxide output spikes may result with the gas turbine engine system being out of compliance with current governmental emissions regulations.

There is thus a desire for an improved gas turbine engine system using selective catalyst reduction systems and the like. Such SCR systems or other types of emissions reduction systems should maintain overall nitrogen oxide emissions within governmental regulations while eliminating or reducing the parasitical loads on the gas turbine engine system usually required for such systems for increased overall performance and efficiency.

US-A-2011/030331 concerns an emissions reduction system. An ammonia injection system includes an ammonia injection grid (AIG), an ammonia mixing tank and a compressor. The compressor provides a flow of hot compressed air to the ammonia mixing tank, which causes the ammonia to vaporise before being conveyed to the AIG.

US-A-2009/220401 concerns a denitrating apparatus comprising an ammonia injection unit that provides ammonia to a catalyst layer in an exhaust gas passage. The ammonia injection unit comprises a compressor that supplies compressed air to an ejector, which also receives a part of the exhaust gas. The ejector provides the mixture of exhaust gas and compressed air to an evaporator, which receives and evaporates ammonia, and supplies the ammonia-containing gas to the catalyst layer in the exhaust gas passage.

US-B-6 878 359 concerns the preparation of a reducing agent for the selective catalytic reduction of nitrogen oxides in an exhaust gas. The arrangement uses aqueous urea, which is provided to a preparation reactor. A compressor compresses a partial stream of the exhaust gas and provides the compressed exhaust gas to the reactor. In the reactor, pyrolysis and hydrolysis convert the urea to ammonia, which is provided in a discharge stream to an injector.

### SUMMARY OF THE INVENTION

The present application and the resultant patent thus provide a gas turbine engine system. The gas turbine engine system may include a gas turbine engine producing a flow of combustion gases, an emissions reduction system in communication with the gas turbine engine, a flow of ammonia to be injected into the flow of combustion gases, and a source of compressed gas to vaporize the flow of ammonia. The source of compressed gas consists of a flow of compressed carbon dioxide or a flow of compressed nitrogen.

The present application and the resultant patent further provide a method of operating a gas turbine engine system. The method may include the steps of generating a flow of combustion gases, compressing a flow of carbon dioxide, vaporizing a flow of ammonia with the compressed flow of carbon dioxide, and injecting the vaporized flow of ammonia into the flow of combustion gases.

The present application further provides a gas turbine engine system. The gas turbine engine system may include a gas turbine engine producing a flow of combustion gases, a selective catalyst reduction system in communication with the gas turbine engine, a flow of ammonia to be injected into the flow of combustion gases, and a carbon dioxide capture and sequestration system to provide a flow of carbon dioxide to vaporize the flow of ammonia.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine system using a selective catalyst reduction system.
Fig. 2 is a schematic diagram of a gas turbine engine system using a selective catalyst reduction system as may be described herein.
Fig. 3 is a schematic diagram of an alternative embodiment of a gas turbine engine system with a selective catalyst reduction system as may be described herein.
Fig. 4 is a front plan view of an ammonia injection grid that may be used herein.
Fig. 5 is a front plan view of an alternative embodiment of an ammonia injection grid that may be used herein.
Fig. 6 is a schematic diagram of an alternative embodiment of a gas turbine engine system with a selective catalyst reduction system as may be described herein.
Fig. 7 is a schematic diagram of an alternative embodiment of a gas turbine engine system with a selective catalyst reduction system as may be described herein.
Fig. 8 is a schematic diagram of an alternative embodiment of a gas turbine engine system with a selective catalyst reduction system as may be described herein.
Fig. 9 is a schematic diagram of an alternative embodiment of a gas turbine engine system with a stoichiometric exhaust gas recirculation exhaust system as may be described herein.

### DETAILED DESCRIPTION

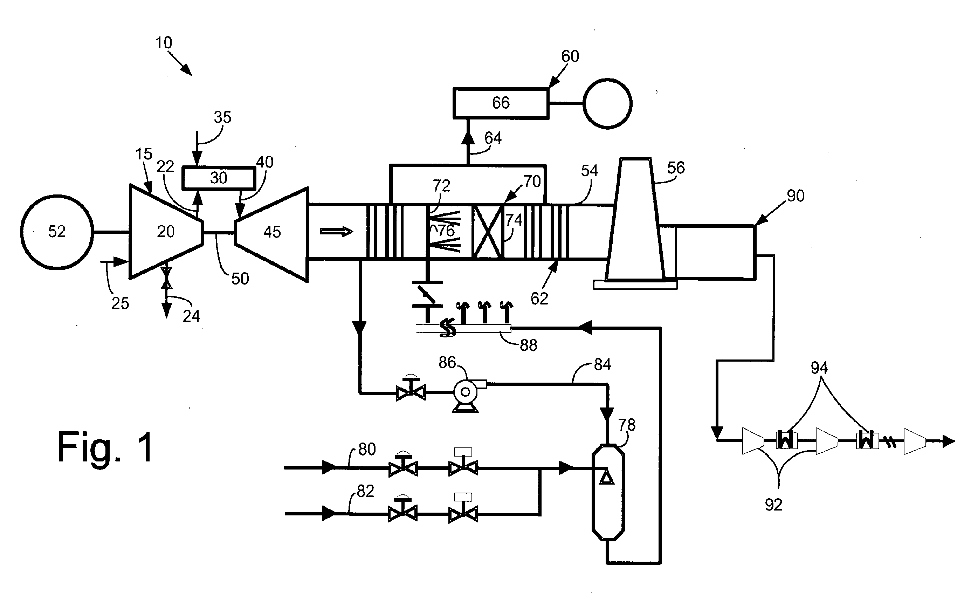

Referring now to the drawings, in which like numerals refer to like elements throughout the several views, Fig. 1 shows a schematic view of a gas turbine engine system 10 as may be used herein. The gas turbine engine system 10 may include one or more gas turbine engines 15. Each gas turbine engine 15 may include a compressor 20. The compressor 20 compresses an incoming flow of air 25. The compressor 20 delivers the compressed flow of air 25 to a combustor 30. The combustor 30 mixes the compressed flow of air 25 with a compressed flow of fuel 35 and ignites the mixture to create a flow of combustion gases 40. Although only a single combustor 30 is shown, the gas turbine engine 15 may include any number of combustors 30. The flow of combustion gases 40 is in turn delivered to a turbine 45. The flow of combustion gases 40 drives the turbine 45 so as to produce mechanical work. The mechanical work produced in the turbine 45 drives the compressor 20 via a shaft 50 and an external load 52 such as an electrical generator and the like. The flow of combustion gases 40 may be exhausted via ducting 54 to a stack 56 or otherwise disposed.

If the gas turbine engine 10 is in the form of a combined cycle system 60, a heat recovery steam generator 62 may be in communication with the ducting 54 so as to exchange heat between a flow of steam 64 and the flow of combustion gases 40. The heat recovery steam generator 62 may be in communication with one or more steam turbines 66. The steam turbines 66 may drive the same or a separate load 52. Other components and other configurations may be used herein.

The gas turbine engine system 10 also may include an SCR system 70 or other type of emissions reduction system and the like. The SCR system 70 may include an ammonia injection grid 72 positioned within or about the ducting 54 with a catalyst 74 downstream thereof. The ammonia injection grid 72 may have a number of tubes 76 therein for spraying the ammonia or other reductant into the flow of combustion gases 40 for a reaction within the catalyst 74 so as to reduce the nitrogen oxides therein as described above.

The SCR system 70 also may include a vaporizer 78. The vaporizer 78 may be in communication with an aqueous ammonia flow 80 and an atomizing air flow 82. The vaporizer 78 also may be in communication with a flue gas extraction 84 from the ducting 60 via a flue gas fan 86. The flue gas extraction 84 vaporizes the atomized ammonia flow within the vaporizer 78. The gaseous ammonia then may be delivered to the ammonia injection grid 72 via an ammonia injection grid manifold 88. Other components and other configurations may be used herein.

The gas turbine engine system 10 also may include a carbon dioxide capture and sequestration system 90 or other type of compressed gas source. The carbon dioxide capture and sequestration system 90 may capture the carbon dioxide within the flow of combustion gases 40 downstream of the SCR system 70. The carbon dioxide capture and sequestration system 90 may include a number of carbon dioxide compressors 92, a number of intercoolers 94, and/or other components. As described above, the carbon dioxide capture and sequestration system 90 compresses and cools the flow of carbon dioxide to a supercritical state for storage and transport. The carbon dioxide compressors 92 and the intercoolers 94, however, are considered a parasitic load on the overall gas turbine engine system 10. Other components and other configurations may be used herein.

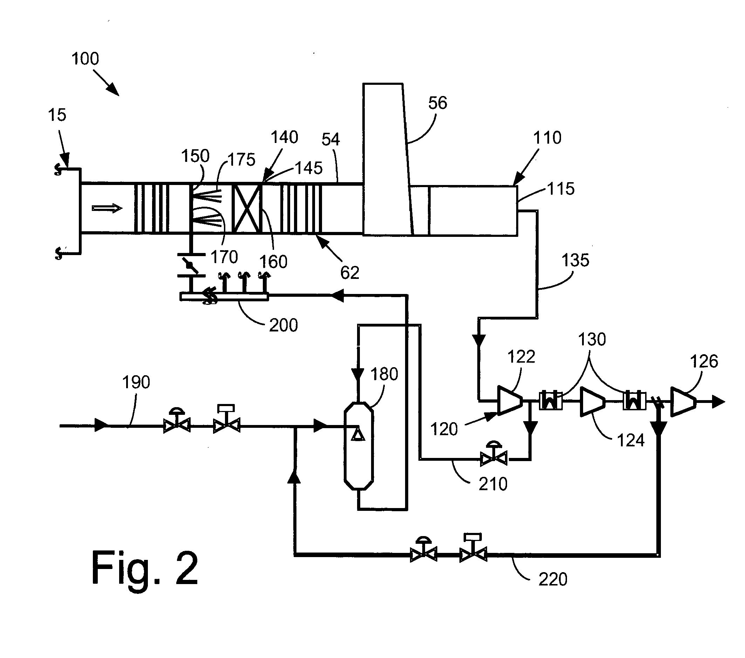

Fig. 2 shows a gas turbine engine system 100 as may be described herein. The gas turbine engine system 100 may use the gas turbine engine 15, the heat recovery steam generator 62, and similar components as are described above. The gas turbine engine system 100 also may include a source of compressed gases 110. In this example, the source of compressed gases 110 may be a carbon dioxide capture and sequestration system 115. The carbon dioxide capture and sequestration system 115 may be similar to that described above and may include a number of carbon dioxide compressors 120 and intercoolers 130 to compress and cool one or more flows of carbon dioxide 135. In this example, a first compressor 122, a second compressor 124, and a third compressor 126 are shown although any number of compressors may be used. Other components and other configurations may be used herein.

The gas turbine engine system 100 also may include an emissions reduction system 140. In this example, the emission reduction system 140 may be a selective catalyst reduction system 145. Similar to that described above, the SCR system 145 may include an ammonia injection grid 150 with a catalyst 160 positioned downstream thereof. The ammonia injection grid 150 may include a number of tubes 170 therein in order to inject a flow of ammonia 175 into the ducting 54 and the flow of combustion gases 40 of the gas turbine engine 15. The SCR system 145 also may include a vaporizer 180. The vaporizer 180 may be in communication with an aqueous ammonia line 190. The vaporizer 180 provides vaporized ammonia to a manifold 200 of the ammonia injection grid 150.

The vaporizer 180 also may be in communication with the one or more flows of the carbon dioxide 135. Specifically, a first carbon dioxide line 210 may be positioned downstream of the first carbon dioxide compressor 122 and in communication with the vaporizer 180 while a second carbon dioxide line 220 may be positioned further downstream and in communication with the aqueous ammonia line 190. The second carbon dioxide line 220 thus provides the flow of carbon dioxide 135 so as to atomize the flow of aqueous ammonia from the aqueous ammonia line 190 while the flow of carbon dioxide 135 from the first carbon dioxide line 210 serves to vaporize the ammonia therein for use downstream in the manifold 200 of the ammonia injection grid 150. Other components and other configurations may be used herein.

The SCR system 145 thus eliminates the use of the flue gas extraction 84, the flue gas fan 86, and the atomizing air flow 82 through the use of the flows of carbon dioxide 135 from the first carbon dioxide line 210 and the second carbon dioxide line 220. Moreover higher amounts of the flow of carbon dioxide 135 may be recirculated so as to increase the momentum flux ratio issue through the ammonia injection grid 150 so as to improve mixing between the flow of ammonia 175 and the combustion gases 40. Increased mixing should improve the overall efficiency of the SCR system 145. Other components and other configurations may be used herein.

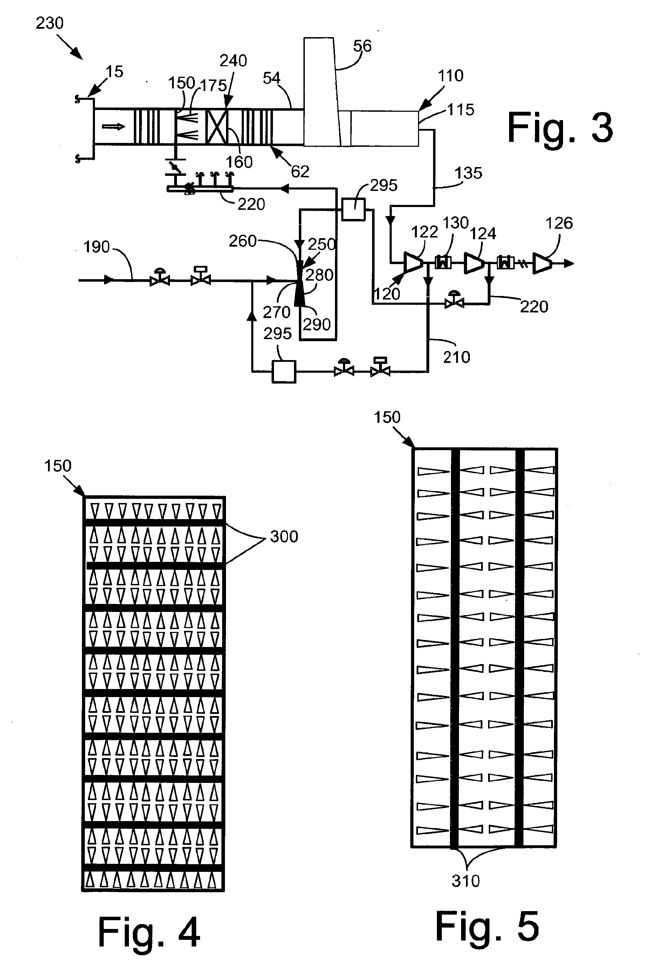

Fig. 3 shows a further embodiment of a gas turbine engine system 230 as may be described herein. The gas turbine engine system 230 may use the gas turbine engine 15 and the carbon dioxide compression and sequestration system 115 described above. The gas turbine engine system 230 also may include a SCR system 240. The SCR system 240 may include the ammonia injection grid 150, the catalyst 160, the aqueous ammonia source 190, and the manifold 200.

Instead of the vaporizer 180, however, the SCR system 240 may use an ejector 250. The ejector 250 is a mechanical device with no moving parts. The ejector 250 mixes two fluid steams based on a momentum transfer. A motive air inlet 260 may be in communication with higher pressure air from the second carbon dioxide line 220. The ejector 250 also may include a suction air inlet 270. The suction air inlet 270 may be in communication with the first carbon dioxide line 210 and the aqueous ammonia line 190. The ejector 250 also includes a mixing tube 280 and a diffuser 290. The higher pressure flow of carbon dioxide 135 from the second carbon dioxide line 220 enters the motive air inlet 260 as the motive flow and is reduced in pressure below that of the flow of carbon dioxide 135 from the first carbon dioxide line 210 as the suction flow and is accelerated therewith. The flows are mixed in the mixing tube 280 and flow through the diffuser 290. The ejector 250 thus atomizes and vaporizes the flow of aqueous ammonia therein. Other components and other configurations of the ejector 250 and the like may be used herein.

The pressure created in the ejector 250 is high enough to create a sonic jet through the ammonia injection grid 150. As a result, the number of tubes 170 in the ammonia injection grid 150 may be reduced. For example, as is shown in Figs. 4 and 5, the number of tubes 170 may be greatly reduced to a number of horizontal headers 300 or a number of vertical headers 310. The cross sonic flow jet mixing produced herein thus may be similar to an inlet bleed heat system and the like. Other components related to the feed of ammonia also may be used herein.

A heater 295 also may be used on the first and/or second carbon dioxide lines 210, 220 during transient operations and the like in case the flow of carbon dioxide 135 may not be warm enough to vaporize the flow of ammonia 175. The temperature of the compressor discharge may vary depending upon location and insulation. For example, an electrical heater may be used herein. The heater 295 then may be turned off once the flow of carbon dioxide 135 is sufficiently warm. Steam or any other type of heat source also may be used for vaporization. For example, the flow of steam 64 from the heat recovery steam generator 62 or otherwise could be used either to heat the flow of carbon dioxide 135 or as the motive fluid itself or a portion thereof. An ambient air flow also may be entrained by the ejector 250 for higher efficiency. Alternatively, the flow of carbon dioxide 135 may pass through the heat recovery steam generator 62 and exchange heat therein.

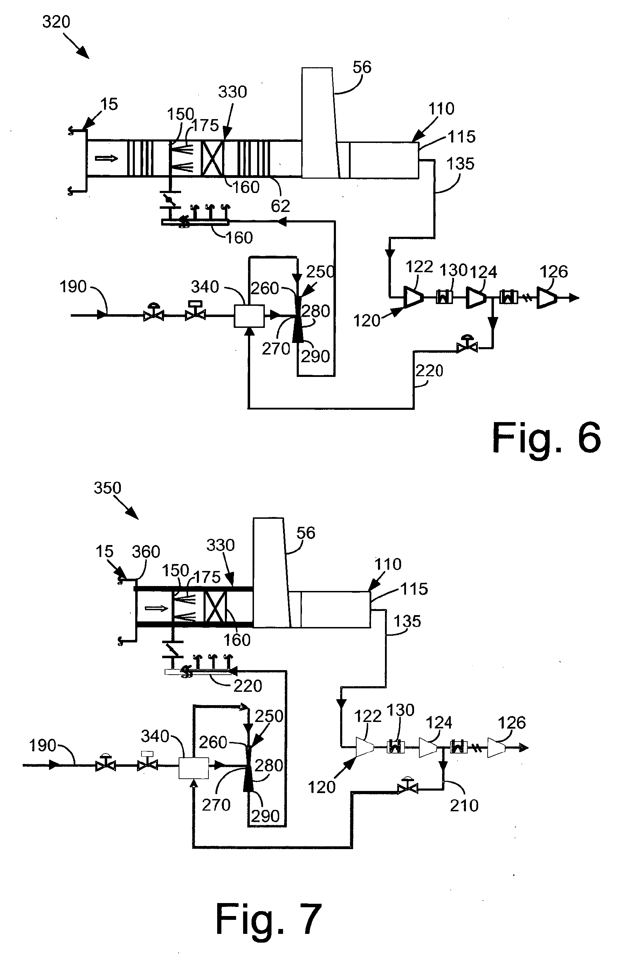

Still referring to Fig. 3 and also Fig. 1, another embodiment herein may utilize a compressor discharge air 22, a compressor interstage bleed 24, or both to provide the motive flow to ejector 250. In this example, the carbon dioxide lines 210 and 220 may be disconnected from the heaters 295 and then one or more of the lines may be used to connect the heaters 295 with either or both of the compressor air sources 22, 24. The heaters 295 also may be used to heat the compressor air sources 22, 24 in cases where the compressor air sources may not be warm enough to vaporize the flow of ammonia 175. It is understood that this embodiment may be utilized on a gas turbine engine system that does not include the carbon dioxide capture and sequestration system 115 and the like. Fig. 6 shows a further embodiment of a gas turbine engine system 320. The gas turbine engine system 320 may be similar to those described above and may use the gas turbine engines 15, the heat recovery stream generator 62, the carbon dioxide capture and sequestration system 115, and the like. The gas turbine engine system 320 also may include a SCR system 330. Similar to that described above, the SCR system 330 may include the ammonia injection grid 150 with the catalyst 160 positioned downstream thereof. The SCR system 330 also may include the aqueous ammonia line 190 and the manifold 200 of the ammonia injection grid 150. The SCR system 330 also may include they ejector 250. In this example, the SCR system 330 only uses the second carbon dioxide line 220.

The second carbon dioxide line 220 may be in communication with an aqueous ammonia heat exchanger 340. The aqueous ammonia heat exchanger 340 may be positioned on the aqueous ammonia line 190 upstream of the ejector 250. The flow of carbon dioxide 135 from the second carbon dioxide line 220 thus exchanges heat with the flow of ammonia 175 in the aqueous ammonia line 190 so as to convert the flow to gaseous form. The flow of carbon dioxide 135 then enters the motive air inlet 260 while the flow of ammonia 175 enters the suction inlet 270 in a manner similar to that described above. The flow of carbon dioxide 135 thus creates a sonic jet through the ammonia injection grid 150. The use of the aqueous ammonia heat exchanger 340 also improves overall ejector 250 performance. Other components and other configurations may be used herein.

Fig. 7 shows a further embodiment of a gas turbine engine system 350 as may be described herein. The gas turbine engine system 350 may use the carbon dioxide compression and sequestration system 115 as well as the SCR system 300 described above. In this case, the gas turbine engine 15 may be in the form of simple cycle system 360. In other words, the heat recovery steam generator 62, the steam turbine 66, and the like need not be used herein. Other components and other configurations may be used herein.

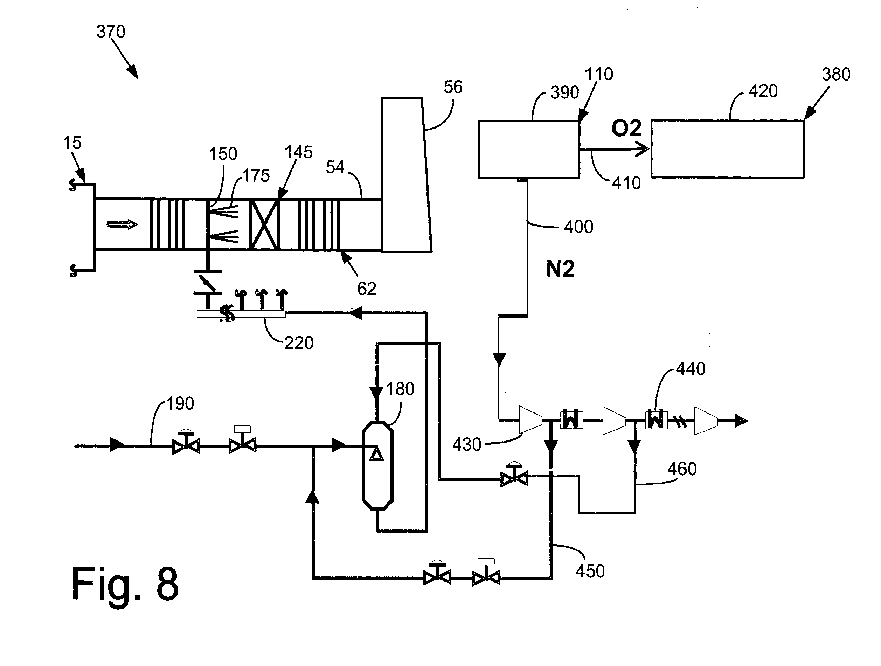

Fig. 8 shows a further embodiment of a gas turbine engine system 370. In this example, the gas turbine engine 15 with the heat recovery steam generator 62 may be used. Likewise, the SCR system 145 or a similar SCR system 145 may be used herein with the vaporizer 180 or the ejector 250. In this example, instead of the carbon dioxide capture and sequestration system 115, the SCR system 145 may be used in the context of an integrated gasification combined cycle (IGCC) system 380. As is known, the IGCC system 380 may include an air separation unit 390 so as to separate a flow of nitrogen 400 from a flow of oxygen 410 intended for use in a gasifier 420 and the like. Although the flow of nitrogen 400 typically may be vented, the flow 400 here may be used as the source of compressed gases 110.

The IGCC system 380 thus may include a number of nitrogen compressors 430 and intercoolers 440 similar to the carbon dioxide compressors and intercoolers described above. The IGCC system 380 thus may provide the flow of nitrogen 400 to the vaporizer 180 via a first nitrogen line 450 and a second flow of nitrogen 400 via a second nitrogen line 460 in a manner similar to the first carbon dioxide line 210 and the second carbon dioxide line 220. The flow of nitrogen 400 thus may be used for the atomization and vaporization of the aqueous ammonia in the SCR system 145. Because the temperature of nitrogen may be less than about 350 degrees Fahrenheit (about 176.7 degrees Celsius), the temperature will not impact the reaction flue gas and should help in overall control of nitrogen oxide emissions. Other components and other configurations may be used herein.

Although the present application is prescribed in terms of the SCR systems, the same types of delivery systems for the ammonia injection grid described herein also are applicable to other types of combustion systems with emissions reduction systems 140. For example, the emissions reduction system 140 may be in the form of a heat recovery steam generator used in a stoichiometric exhaust gas recovery (SEGR) system 500 and the like. Inert carbon dioxide or nitrogen may be used as a carrier for the ammonia for NOx reduction as opposed to the traditional bypass flows used therein. Other components and other configurations may be used herein.

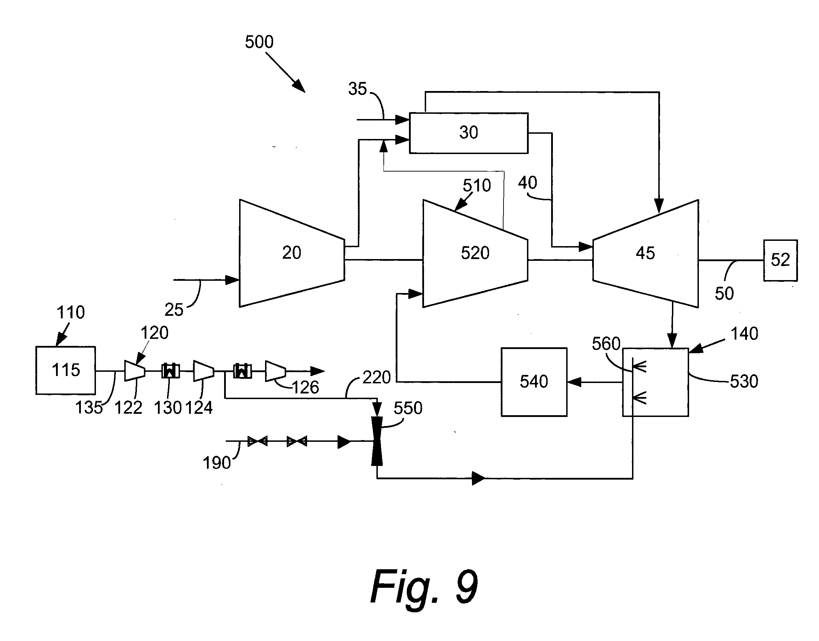

Fig. 9 shows and example of the stoichiometric exhaust gas recovery system 500. Generally described, the stoichiometric exhaust gas recovery system 500 includes a compressor 20, a combustor 30, and a turbine 45 similar to that described above. The stoichiometric exhaust gas recovery system 500 further includes a stoichiometric exhaust gas recovery subsystem 510. The stoichiometric exhaust gas recovery subsystem 510 may include a stoichiometric exhaust gas recovery compressor 520. The stoichiometric exhaust gas recovery compressor 520 may be in communication with and driven by the shaft 50 or otherwise. The stoichiometric exhaust gas recovery subsystem 510 also may include a heat recovery steam generator 530 and a cooler 540 downstream of the turbine 45. Other components and other configurations also may be used herein. The stoichiometric exhaust gas recovery system 500 may use an ejector 550 to supply a flow of ammonia 175 to an ammonia injection grid 560 within the heat recovery steam generator 530 for reduction of nitrogen oxides. Instead of the use of an extraction flow from the stoichiometric exhaust gas recovery compressor 520, the motive of flow may be provided by the source of compressed gases 110, either the carbon dioxide capture and sequestration system 115 or the air separation unit 390. The first carbon dioxide line 210 and/or the second carbon dioxide line 220 thus may provide the flow of carbon dioxide 135 to the ejector 550. Other components and other configurations may be used herein.

The use of the flows of compressed carbon dioxide 135 and/or nitrogen 400 thus eliminates or at least reduces the parasitic loads generally found in use of SCR systems and other types of emissions reduction systems. Moreover, the complexity of the overall systems should be reduced herein. As such, overall power plant efficiency and output should improve.

It should be apparent that the foregoing relates only to certain embodiments of the present application and the resultant patent. Numerous changes and modifications may be made herein by one of ordinary skill in the art without departing from the scope of the invention as defined by the following claims and the equivalents thereof.

## Claims

1. A gas turbine engine system (100), comprising:
a gas turbine engine (15) producing a flow of combustion gases (40);
an emissions reduction system (140) in communication with the gas turbine engine (15);
the emissions reduction system (140) comprising a flow of ammonia (175) to be injected into the flow of combustion gases (40); and
a source of compressed gas (110) to vaporize the flow of ammonia (175), wherein the source of compressed gas (110) consists of a flow of compressed carbon dioxide (135) or a flow of compressed nitrogen (400).

2. The gas turbine engine system (100) of claim 1, wherein the source of compressed gas (110) comprises a carbon dioxide capture and sequestration system (115) for a flow of carbon dioxide (135).

3. The gas turbine engine system (100) of claim 2, wherein the carbon dioxide capture and sequestration system (115) comprises a plurality of compressors (120) and a plurality of intercoolers (130).

4. The gas turbine engine system (100) of either of claim 2 or 3, wherein the carbon dioxide capture and sequestration system (115) comprises one or more carbon dioxide lines (210, 220) in communication with the emissions reduction system (140).

5. The gas turbine engine system (100) of any preceding claim, wherein the emissions reduction system (140) comprises a selective catalyst reduction system (145).

6. The gas turbine engine system (100) of claim 5, wherein the selective catalyst reduction system (145) comprises an ammonia injection grid (150) for injecting the flow of ammonia (175) in the flow of combustion gases (40) and a catalyst (160).

7. The gas turbine engine system (100) of claim 6, wherein the ammonia injection grid (150) comprises a plurality of vertical (310) or horizontal (300) headers.

8. The gas turbine engine system (100) of claim 5, wherein the selective catalyst reduction system (145) comprises a vaporizer (180) to vaporize the flow of ammonia (175) with the source of compressed gas (110).

9. The gas turbine engine system (100) of any of claims 5 to 8, wherein the selective catalyst reduction system (145) comprises an ejector (250) and wherein the ejector (250) is driven by the source of compressed gas (110).

10. The gas turbine engine system (100) of any of claims 5 to 9, wherein the selective catalyst reduction system (145) comprises an ammonia heat exchanger (340).

11. The gas turbine engine system (100) of any preceding claim, wherein the source of compressed gas (110) comprises a heater (295).

12. The gas turbine engine system (100) of any preceding claim, wherein the gas turbine engine (15) comprises a simple cycle system (360) or a combined cycle system (380).

13. The gas turbine engine system (100) of any preceding claim, wherein the source of compressed gas (110) comprises an air separation unit (390).

14. The gas turbine engine system (100) of any preceding claim, wherein the emissions reduction system (140) comprises a stoichiometric exhaust gas recirculation system.

15. A method of operating a gas turbine engine system (100), comprising:
generating a flow of combustion gases (40);
compressing a flow of carbon dioxide (135);
vaporizing a flow of ammonia (175) with the compressed flow of carbon dioxide (135); and
injecting the vaporized flow of ammonia (175) into the flow of combustion gases (40).

## Patentansprüche

1. Gasturbinenmotorsystem (100), Folgendes umfassend:
einen Gasturbinenmotor (15), der einen Verbrennungsgasstrom (40) erzeugt,
ein Emissionsreduktionssystem (140), das mit dem Gasturbinenmotor (15) in Verbindung steht,
wobei das Emissionsreduktionssystem (140) einen Ammoniakstrom (175) umfasst, der in den Verbrennungsgasstrom (40) eingedüst werden soll, und
eine Druckgasquelle (110), um den Ammoniakstrom (175) zu verdampfen, wobei die Druckgasquelle (110) aus einem Strom komprimierten Kohlenstoffdioxids (135) oder einem Strom komprimierten Stickstoffes (400) besteht.

2. Gasturbinenmotorsystem (100) nach Anspruch 1, wobei die Druckgasquelle (110) ein System zur Kohlenstoffdioxidbindung und -abscheidung (115) für einen Kohlenstoffdioxidstrom (135) umfasst.

3. Gasturbinenmotorsystem (100) nach Anspruch 2, wobei das System zur Kohlenstoffdioxidbindung und -abscheidung (115) mehrere Kompressoren (120) und mehrere Zwischenkühler (130) umfasst.

4. Gasturbinenmotorsystem (100) nach Anspruch 2 oder 3, wobei das System zur Kohlenstoffdioxidbindung und -abscheidung (115) eine oder mehrere Kohlenstoffdioxidleitungen (210, 220) umfasst, die mit dem Emissionsreduktionssystem (140) in Verbindung stehen.

5. Gasturbinenmotorsystem (100) nach einem der vorhergehenden Ansprüche, wobei das Emissionsreduktionssystem (140) ein System zur selektiven katalytischen Reduktion (145) umfasst.

6. Gasturbinenmotorsystem (100) nach Anspruch 5, wobei das System zur selektiven katalytischen Reduktion (145) ein Ammoniakeindüsegitter (150) zum Eindüsen des Ammoniakstromes (175) in den Verbrennungsgasstrom (40) und einen Katalysator (160) umfasst.

7. Gasturbinenmotorsystem (100) nach Anspruch 6, wobei das Ammoniakeindüsegitter (150) mehrere vertikale (310) oder horizontale (300) Verteilerstücke umfasst.

8. Gasturbinenmotorsystem (100) nach Anspruch 5, wobei das System zur selektiven katalytischen Reduktion (145) einen Verdampfer (180) umfasst, um den Ammoniakstrom (175) mit Hilfe der Druckgasquelle (110) zu verdampfen.

9. Gasturbinenmotorsystem (100) nach einem der Ansprüche 5 bis 8, wobei das System zur selektiven katalytischen Reduktion (145) eine Ausstoßvorrichtung (250) umfasst und wobei die Ausstoßvorrichtung (250) von der Druckgasquelle (110) angetrieben wird.

10. Gasturbinenmotorsystem (100) nach einem der Ansprüche 5 bis 9, wobei das System zur selektiven katalytischen Reduktion (145) einen Ammoniakwärmetauscher (340) umfasst.

11. Gasturbinenmotorsystem (100) nach einem der vorhergehenden Ansprüche, wobei die Druckgasquelle (110) ein Heizgerät (295) umfasst.

12. Gasturbinenmotorsystem (100) nach einem der vorhergehenden Ansprüche, wobei der Gasturbinenmotor (15) ein Gasturbinensystem (360) oder ein Gas- und Dampf-Kombisystem (380) umfasst.

13. Gasturbinenmotorsystem (100) nach einem der vorhergehenden Ansprüche, wobei die Druckgasquelle (110) eine Luftzerlegungseinheit (390) umfasst.

14. Gasturbinenmotorsystem (100) nach einem der vorhergehenden Ansprüche, wobei das Emissionsreduktionssystem (140) ein stöchiometrisches Abgasrückführsystem umfasst.

15. Verfahren zum Betreiben eines Gasturbinenmotorsystems (100), Folgendes umfassend:
Erzeugen eines Verbrennungsgasstromes (40),
Komprimieren eines Kohlenstoffdioxidstromes (135),
Verdampfen eines Ammoniakstromes (175) mit Hilfe des komprimierten Kohlenstoffdioxidstromes (135) und
Eindüsen des dampfförmigen Ammoniakstromes (175) in den Verbrennungsgasstrom (40).

## Revendications

1. Système de turbine à gaz (100), comprenant :
une turbine à gaz (15) produisant un flux de gaz de combustion (40) ;
un système de réduction d'émissions (140) en communication avec la turbine à gaz (15) ;
le système de réduction d'émissions (140) comprenant un flux d'ammoniac (175) à injecter dans le flux de gaz de combustion (40) ; et
une source de gaz comprimé (110) pour vaporiser le flux d'ammoniac (175), dans lequel la source de gaz comprimé (110) consiste en un flux de dioxyde de carbone comprimé (135) ou en un flux d'azote comprimé (400).

2. Système de turbine à gaz (100) selon la revendication 1, dans lequel la source de gaz comprimé (110) comprend un système de capture et de séquestration de dioxyde de carbone (115) pour un flux de dioxyde de carbone (135).

3. Système de turbine à gaz (100) selon la revendication 2, dans lequel le système de capture et de séquestration de dioxyde de carbone (115) comprend une pluralité de compresseurs (120) et une pluralité de refroidisseurs intermédiaires (130).

4. Système de turbine à gaz (100) selon la revendication 2 ou 3, dans lequel le système de capture et de séquestration de dioxyde de carbone (115) comprend une ou plusieurs conduites de dioxyde de carbone (210, 220) en communication avec le système de réduction d'émissions (140).

5. Système de turbine à gaz (100) selon l'une quelconque des revendications précédentes, dans lequel le système de réduction d'émissions (140) comprend un système de réduction à catalyseur sélectif (145).

6. Système de turbine à gaz (100) selon la revendication 5, dans lequel le système de réduction à catalyseur sélectif (145) comprend une grille d'injection d'ammoniac (150) pour injecter le flux d'ammoniac (175) dans le flux de gaz de combustion (40) et un catalyseur (160).

7. Système de turbine à gaz (100) selon la revendication 6, dans lequel la grille d'injection d'ammoniac (150) comprend une pluralité de collecteurs verticaux (310) ou horizontaux (300).

8. Système de turbine à gaz (100) selon la revendication 5, dans lequel le système de réduction à catalyseur sélectif (145) comprend un vaporisateur (180) pour vaporiser le flux d'ammoniac (175) avec la source de gaz comprimé (110).

9. Système de turbine à gaz (100) selon l'une quelconque des revendications 5 à 8, dans lequel le système de réduction à catalyseur sélectif (145) comprend un éjecteur (250) et dans lequel l'éjecteur (250) est entraîné par la source de gaz comprimé (110).

10. Système de turbine à gaz (100) selon l'une quelconque des revendications 5 à 9, dans lequel le système de réduction à catalyseur sélectif (145) comprend un échangeur thermique d'ammoniac (340).

11. Système de turbine à gaz (100) selon l'une quelconque des revendications précédentes, dans lequel la source de gaz comprimé (110) comprend un dispositif de chauffage (295).

12. Système de turbine à gaz (100) selon l'une quelconque des revendications précédentes, dans lequel la turbine à gaz (15) comprend un système à cycle simple (360) ou un système à cycle combiné (380).

13. Système de turbine à gaz (100) selon l'une quelconque des revendications précédentes, dans lequel la source de gaz comprimé (110) comprend une unité de séparation d'air (390).

14. Système de turbine à gaz (100) selon l'une quelconque des revendications précédentes, dans lequel le système de réduction d'émissions (140) comprend un système stoechiométrique de recyclage de gaz d'échappement.

15. Procédé de mise en oeuvre d'un système de turbine à gaz (100), comprenant :
la production d'un flux de gaz de combustion (40) ;
la compression d'un flux de dioxyde de carbone (135) ;
la vaporisation d'un flux d'ammoniac (175) avec le flux comprimé de dioxyde de carbone (135) ; et
l'injection du flux vaporisé d'ammoniac (175) dans le flux de gaz de combustion (40).
